# EUROPEAN PATENT APPLICATION

(11) **EP 1 061 485 A1**
(43) Date of publication of application: **20.12.2000**
(21) Application number: 00304131.6
(22) Date of filing: 17.05.2000
(51) Int. Cl.: G07G 1/00

(54) **Produce recognition system employing sound circuitry**

(30) Priority: 14.06.1999 US 333063
(71) Applicant: NCR INTERNATIONAL INC., Dayton, Ohio 45479 (US)
(72) Inventor: Seevers, Daniel Byron, Duluth, Georgia 30096 (US); Gu, Yeming, Suwanee, Georgia 30024 (US); Collins, Donald Alexander, Jnr., Snellville, Georgia 30078 (US); Spencer, Michael Allen, Suwanee, Georgia 30024 (US)
(74) Representative: Cleary, Fidelma

(57) **Abstract**

A produce recognition system which employs sound circuitry to convert analog produce data from a produce data collector to digital produce data. The sound circuitry is controlled by a computer and includes an analog-to-digital converter.

## Description

The present invention relates to product checkout devices and more specifically to a produce recognition system which employs sound circuitry.

Bar code readers are well known for their usefulness in retail checkout and inventory control. Bar code readers are capable of identifying and recording most items during a typical transaction since most items are labeled with bar codes.

Items which are typically not identified and recorded by a bar code reader are produce items, since produce items are typically not labeled with bar codes. Bar code readers may include a scale for weighing produce items to assist in determining the price of such items. But identification of produce items is still a task for the checkout operator, who must identify a produce item and then manually enter an item identification code. Operator identification methods are slow and inefficient because they typically involve a visual comparison of a produce item with pictures of produce items. Operator identification methods are also prone to error, on the order of fifteen percent.

In order for a computer to identify produce items, the computer must obtain digital produce data. This digital data may be received from a produce data collector through a serial port in the computer, but serial ports in transaction processing computers are limited.

Sound or audio cards typically employ analog-to-digital (A/D) converters for converting analog sound signals to digital signals for processing and/or storage in a computer as digital files. Sound cards are typically standard equipment in computers sold today and the methods of programming them are well known.

Therefore, it would be desirable to provide a produce recognition system which employs an A/D converter, such as one found on a sound card, to produce digital produce data.

In accordance with a first teaching of the present invention, a produce recognition system which employs sound circuitry is provided. The system includes a produce data collector for collecting produce data from a produce item, and a computer including sound circuitry coupled to the produce data collector for sampling the produce data from the produce data collector. The computer identifies the produce item from sampled produce data.

In a preferred embodiment, the produce data collector couples to a line input jack of the sound circuitry using an audio cable.

From a further aspect, the invention also resides in a produce recognition method including the steps of collecting analog produce data from a produce item by a produce data collector, converting the analog produce data into digital produce data by an analog-to-digital converter within sound circuitry controlled by a computer, and identifying the produce item from the digital produce data by the computer.

The cost of a produce data collector is reduced by sharing an A/D converter used for another purpose, such as sound recording, to digitize produce data rather than incorporating an A/D converter into the produce data collector.

Additional benefits and advantages of the present invention will become apparent to those skilled in the art to which this invention relates from the subsequent description of the preferred embodiments and the appended claims, taken in conjunction with the accompanying drawings, in which:
Fig. 1 is a block diagram of a transaction processing system including a produce data collector;
Fig. 2 is a block diagram of the produce data collector; and
Fig. 3 is a combinational view showing connection of the produce data collector to sound circuitry.

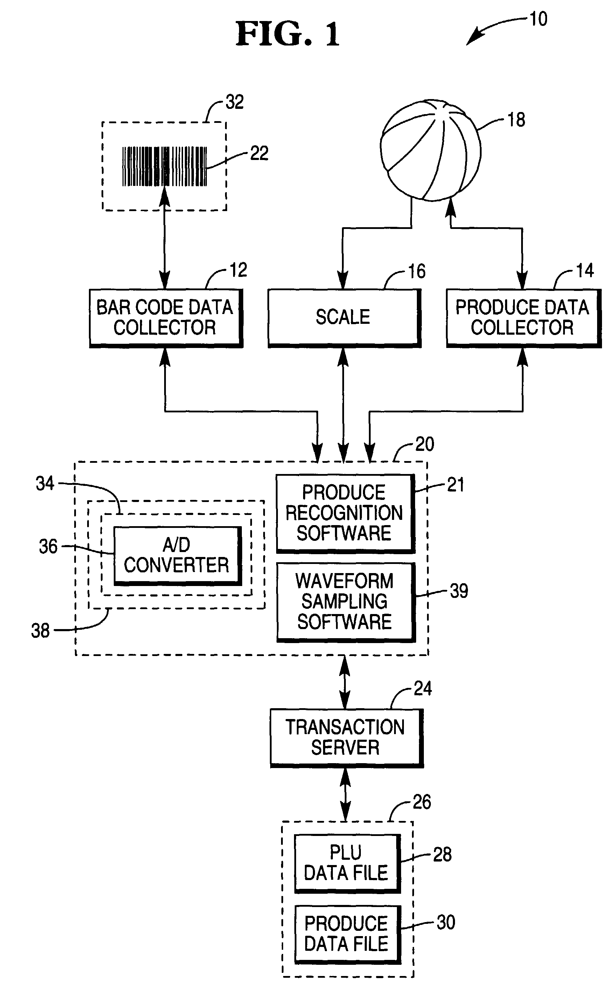

Referring now to Fig. 1, transaction processing system 10 includes bar code data collector 12, produce data collector 14, and scale 16.

Bar code data collector 12 reads bar code 22 on merchandise item 32 to obtain an item identification number, also known as a price look-up (PLU) number, associated with item 32. Bar code data collector 12 may be any bar code data collector, including an optical bar code scanner which uses laser beams to read bar codes. Bar code data collector 12 may be located within a checkout counter or mounted on top of a checkout counter.

Produce data collector 14 collects data for produce item 18 or any other non-barcoded merchandise item. Such data may include color and color distribution data, size data, shape data, and aromatic data. Reference produce data is collected and stored within produce data file 30. During a transaction, operation of produce data collector 14 may be initiated by placement of produce item 18 on scale 16 or in by operator-initiated commands from transaction terminal 20.

Scale 16 determines a weight for produce item 18. Scale 16 works in connection with bar code data collector 12, but may be designed to operate and be mounted separately. Scale 16 sends weight information for produce item 18 to transaction terminal 20 so that transaction terminal 20 can determine a price for produce item 18 based upon the weight information.

Bar code data collector 12 and produce data collector 14 operate separately from each other, but may be integrated together. Bar code data collector 12 works in conjunction with transaction terminal 20 and transaction server 24.

Transaction terminal 20 includes sound circuitry 38, which includes waveform sampling circuitry 34.

Waveform sampling circuitry 34 includes analog-to-digital (A/D) converter 36. Under the present invention, waveform sampling circuitry 34 provides both sound processing and produce waveform sampling functions. A sixteen-bit A/D converter with a sampling rate of 22-44kHz found in common sound circuitry produces acceptable results.

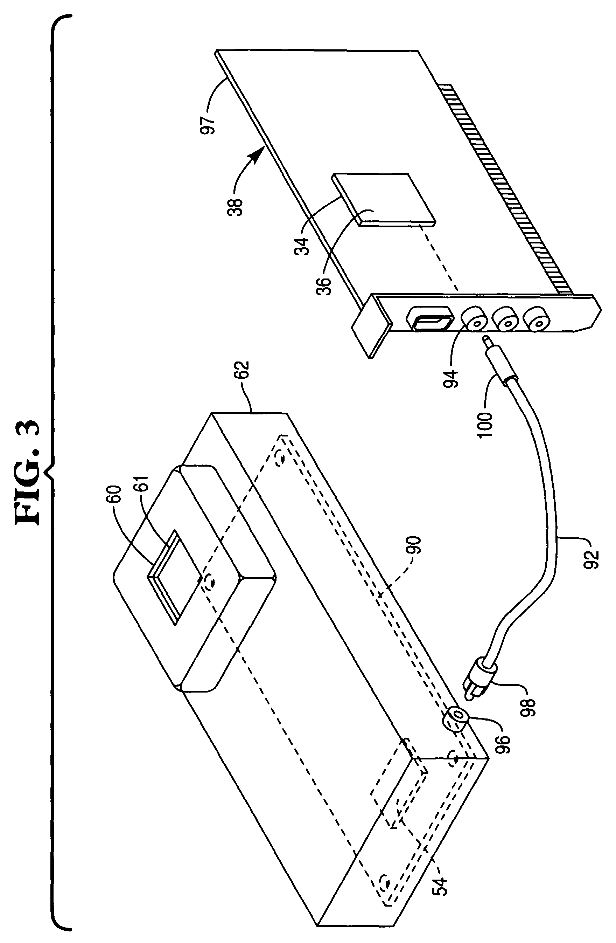

Sound circuitry 38 is preferably integrated into transaction terminal 20 as part of circuit board or card, which may be an add-in sound adapter circuit board, a mother board having onboard sound processing circuitry, or a PC card (such as a PCMCIA card). Sound circuitry from Creative Labs, Inc., is appropriate for this use. Preferably, produce data collector 14 couples to an unamplified line input jack 94 (Fig. 3) of the sound card or mother board. Though standard line input sound circuitry includes two channels (stereo) for sound, only one channel need be used for produce waveform sampling.

Transaction terminal 20 executes waveform sampling software 39 which controls sampling by waveform sampling circuitry 34. Waveform sampling software 39 uses standard input-output (I/O) instructions to control sampling by A/D converter 34. Advantageously, use of sound circuitry 38 avoids finding and configuring a free serial port in transaction terminal 20.

Transaction terminal 20 also executes produce recognition software 21 which compares digitized produce data from waveform sampling software 39 with reference produce data in produce data file 30.

In the case of bar coded items, transaction terminal 20 obtains the item identification number from bar code data collector 12 and retrieves a corresponding price from PLU data file 28 through transaction server 24.

In the case of non-bar coded produce items, transaction terminal 20 executes produce recognition software 21 which executes waveform sampling software 39. Waveform sampling software 39 converts analog waveform signals from produce data collector 14 to digital signals and returns the digital signals to produce recognition software 21. Produce recognition software 21 identifies produce item 18 by comparing produce data in produce data file 30 with collected produce data, retrieves an item identification number from produce data file 30 and a corresponding price from PLU data file 28.

PLU data file 28 and produce data file 30 are stored within storage medium 26, but either may also be located instead at transaction terminal 20, or bar code data collector 12.

To assist in proper identification of produce items, produce recognition software 21 may additionally display candidate produce items for operator verification. Produce recognition software 21 preferably arranges the candidate produce items in terms of probability of match and displays them as text and/or color images on an operator display of transaction terminal 20. The operator may accept the most likely candidate returned by or override it with a different choice.

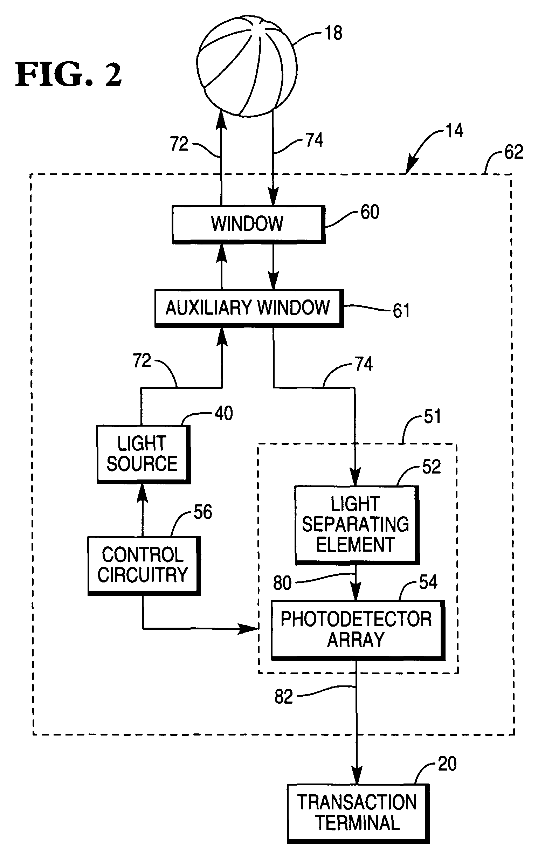

Turning now to Fig. 2, one type of produce data collector 14 is shown, although other produce data collectors which produce analog data signals are also envisioned by the present invention.

Produce data collector 14 primarily includes light source 40, spectrometer 51, control circuitry 56, transparent window 60, auxiliary transparent window 61, and housing 62.

Light source 40 produces light 72. Light source 40 preferably produces a white light spectral distribution, and preferably has a range from four hundred 400nm to 700nm, which corresponds to the visible wavelength region of light.

Light source 40 preferably includes one or more light emitting diodes (LEDs). A broad-spectrum white light producing LED, such as the one manufactured by Nichia Chemical Industries, Ltd., is preferably employed because of its long life, low power consumption, fast turn-on time, low operating temperature, good directivity. Alternate embodiments may include additional LEDs having different colors in narrower wavelength ranges and which are preferably used in combination with the broad-spectrum white light LED to even out variations in the spectral distribution and supplement the spectrum of the broad-spectrum white light LED.

Spectrometer 51 includes light separating element 52, photodetector array 54.

Light separating element 52 splits light 74 into light 80 of a continuous band of wavelengths. Light separating element 52 is preferably a linear variable filter (LVF), such as the one manufactured Optical Coating Laboratory, Inc., or may be any other functionally equivalent component, such as a prism or a grating.

Photodetector array 54 is coupled to waveform sampling circuitry 34 in transaction terminal 20. Photodetector array 54 produces analog waveform signals 82 containing spectral data. The pixels of the array spatially sample the continuous band of wavelengths produced by light separating element 52, and produce a set of discrete analog signal levels. Photodetector array 54 is preferably a complimentary metal oxide semiconductor (CMOS) array, but could be a Charge Coupled Device (CCD) array.

Control circuitry 56 controls operation of produce data collector 14. Control circuitry 56 controls the output of light source 40 to achieve a smooth and consistent light pattern.

Housing 62 contains light source 40, light separating element 52, photodetector array 54, control circuitry 56, and auxiliary transparent window 61. Housing 62 additionally contains transparent window 60 when produce data collector 14 is a self-contained unit. When produce data collector 14 is mounted within the housing of a combination bar code reader and scale, window 60 may be located in a scale weigh plate instead.

Transparent window 60 is mounted above auxiliary transparent window 61. Windows 60 and 61 include an anti-reflective surface coating to prevent light 72 reflected from windows 60 and 61 from contaminating reflected light 74.

In operation, an operator places produce item 18 on window 60. Light source 40 illuminates produce item 18 with light 72. Light separating element 52 separates reflected light 74 into different wavelengths to produce light 80 of a continuous band of wavelengths. Photodetector array 54 produces analog waveform signals 82 containing produce data which it sends to transaction terminal 20.

Transaction terminal 20 executes produce recognition software 21 which executes waveform sampling software 39. Waveform sampling software 39 converts analog waveform signals 82 from photodetector array 54 into digital signals. Produce recognition software 21 uses produce data in the digitized signals to identify produce item 18. Produce recognition software 21 compares the produce data to a library of digitized waveforms stored within produce data file 30. After identification, transaction terminal 20 obtains a unit price from PLU data file 28 and a weight from scale 16 in order to calculate a total cost of produce item 18. Transaction terminal 20 enters the total cost into the transaction.

With reference to Fig. 3, photodetector array 54 is mounted to printed circuit board 90 within produce data collector 14. Photodetector array 54 provides analog waveform signals through output terminal 96.

Sound circuitry 38 is shown as an adapter card 97 which connects to a system bus within terminal 20. Waveform sampling circuitry 34 is mounted to adapter card 97. Waveform sampling circuitry 34 receives analog waveform signals through line input terminal 94.

A standard audio cable 92 with standard input and output connectors 98 and 100 may be used to connect output terminal 96 of produce data collector 14 to line input terminal 94 of sound circuitry 38. If audio cable 92 is a stereo audio cable, only one channel is needed and used.

Advantageously, use of sound circuitry 38 to provide waveform sampling circuitry 34 avoids the cost of adding sampling circuitry to produce data collector 14 and having to send digitized produce data to terminal 20 through a serial port.

Although the invention has been described with particular reference to certain preferred embodiments thereof, variations and modifications of the present invention can be effected within the spirit and scope of the following claims.

## Claims

1. A produce recognition system characterized by:
a produce data collector for collecting produce data from a produce item; and
a computer including sound circuitry coupled to the produce data collector for sampling the produce data from the produce data collector;
wherein the computer identifies the produce item from sampled produce data.

2. The produce recognition system according to claim 1, wherein the sound circuitry comprises:
an analog-to-digital converter which converts analog produce data from the produce item into digital produce data.

3. The produce recognition system according to claim 1, wherein the sound circuitry is located on a mother board within the computer.

4. The produce recognition system according to claim 1, wherein the sound circuitry is located on an adapter board within the computer.

5. The produce recognition system according to claim 1, wherein the sound circuitry is located on a PC card within the computer.

6. The produce recognition system according to any preceding claim, further comprising:
an audio cable for coupling the sound circuitry to the produce data collector.

7. The produce recognition system according to claim 6, wherein the audio cable couples to a line input jack in the sound circuitry.

8. The produce recognition system according to any preceding claim, wherein the sound circuitry comprises at least one channel for processing the produce data from the produce data collector.

9. The produce recognition system according to any preceding claim, wherein the produce data collector comprises:
a spectrometer.

10. The produce recognition system according to any preceding claim, wherein the computer identifies the produce item by comparing the sampled produce data to reference produce data.

11. A produce recognition method comprising the steps of:
(a) collecting analog produce data from a produce item by a produce data collector;
(b) converting the analog produce data into digital produce data by an analog-to-digital converter within sound circuitry controlled by a computer; and
(c) identifying the produce item from the digital produce data by the computer.

12. The method according to claim 11, further comprising the step of:
(d) coupling the produce data collector to a line input jack coupled to the analog-to-digital converter using an audio cable.

13. The method according to claims 11 or 12, wherein step (c) comprises the substep of:
(c-1) comparing the digital produce data to reference digital produce data.
